# FASCICULE DE BREVET EUROPEEN

(11) **EP 0 785 064 B1**
(45) Date de publication et mention de la délivrance du brevet: **01.10.2003**
(21) Numéro de dépôt: 97400034.1
(22) Date de dépôt: 08.01.1997
(51) Int. Cl.: B32B 17/10, C03C 27/12

(54) **Vitrage feuilleté et primaire utilisé pour sa fabrication**
Verbundglasscheibe und Primer zur Verwendung bei seiner Herstellung
Laminated glazing and primer used for its making

(30) Priorité: 19.01.1996 FR 9600577
(43) Date de publication de la demande: 23.07.1997
(73) Titulaire: SAINT-GOBAIN GLASS FRANCE, 92400 Courbevoie (FR)
(72) Inventeur: Naoumenko, Yves, 45460 Bray en Val (FR); Bröring, Karin, 52072 Aachen (DE); Vaverka, Ingrid, 52074 Aachen (DE); Gelderie, Udo, 52080 Aachen (DE)
(74) Mandataire: Goldenberg, Virginie Isabelle

(56) Documents cités:
- EP-A- 0 001 531
- US-A- 4 495 156
- US-A- 4 619 973
- US-A- 4 959 405

## Description

La présente invention concerne un verre - ou "vitrage" - feuilleté comprenant au moins une feuille de verre et au moins une feuille transparente de résine ionomère, l'une de ces feuilles étant revêtue, au moins en partie, d'un primaire. L'invention concerne également le primaire utilisé pour réaliser ce vitrage feuilleté.

Les verres feuilletés sont couramment utilisés dans le bâtiment et dans les moyens de transport comme vitrages présentant des caractéristiques de "protection sécurité" et permettant de réduire la probabilité des effractions et des sinistres par choc. Comme exemples de verres feuilletés particulièrement résistants aux chocs, on trouve notamment des verres feuilletés comprenant au moins une feuille de verre et au moins une feuille de polycarbonate. Cependant, de tels vitrages posent notamment des problèmes d'adhésion du polycarbonate au verre ou de fissuration (du fait des différences entre les coefficients de dilatation thermique) lorsque le verre et le polycarbonate sont directement associés. Il est connu, pour remédier à ces problèmes, d'intercaler entre le verre et le polycarbonate au moins une feuille de polyuréthane mais l'utilisation de telles matières accroît considérablement le coût des produits.

Un autre verre feuilleté utilisé dans le même type d'applications et présentant un coût moindre comprend au moins une feuille de verre et au moins une feuille transparente de résine ionomère, un tel verre feuilleté étant notamment décrit dans les brevets EP-191 088, US-4 619 973, US-4 732 944, US-4 906 703 et EP-483 087. Afin d'améliorer l'adhésion entre le verre et la feuille de résine ionomère, il est connu de primer la surface du verre avec un agent de couplage de type silane ou amine organique (amine aliphatique, éthanolamine...) ou diisocyanate avant d'y apposer la feuille de résine ionomère. Cependant, afin notamment d'éliminer tout problème de délaminage, par exemple lors d'opérations de découpage du vitrage feuilleté obtenu, il peut être intéressant d'augmenter encore l'adhésion entre les feuilles de résine ionomères et les substrats, notamment les substrats en verre, qui leur sont associés au sein des vitrages feuilletés.

L'objet de la présente invention est de fournir un vitrage feuilleté amélioré par rapport aux deux catégories de vitrages feuilletés précédemment mentionnées, ce vitrage étant économique, présentant de bonnes propriétés de résistance aux chocs, de bonnes propriétés optiques et une résistance accrue au délaminage.

Ce but est atteint grâce au vitrage selon l'invention, ce vitrage comprenant au moins une feuille de verre et au moins une feuille transparente de résine ionomère, l'adhésion de la feuille de résine ionomère à une autre feuille du vitrage se faisant, en au moins l'une ou partie d'une de ses faces, par l'intermédiaire d'au moins un chélate de métal.

La présente invention concerne également le primaire comprenant le chélate précédemment défini et permettant d'améliorer l'adhésion de la ou des feuilles de résine ionomère à la ou aux feuilles adjacentes au sein d'un vitrage feuilleté, ce primaire pouvant être utilisé avec avantage pour obtenir le vitrage selon l'invention.

Dans la présente invention, l'expression « résine ionomère » désigne une résine pouvant être extrudée et comprenant des copolymères acide carboxylique-éthylène ou acide carboxylique-alpha oléfine, ces copolymères étant réticulés par réaction ionique. Ce type de résine est décrit notamment dans les brevets EP-483 087, EP-191 088, US-4 619 973, US-4 732 944 et US-4 906 703 auxquels on se référera pour le choix des résines ionomères adaptées à la réalisation des verres feuilletés selon l'invention. Comme résine ionomère on peut utiliser notamment des résines à base de copolymères réticulés par réaction ionique et obtenus par combinaison de monomères d'éthylène, de styrène ou de propylène et de monomères d'acide acrylique ou méthacrylique ou d'anhydre maléique. La (les) résine(s) ionomère(s) utilisée(s) dans le vitrage feuilleté selon l'invention est (sont) généralement à base de copolymère(s) acide acrylique (ou méthacrylique)/éthylène (ou alpha oléfine), réticulés par réaction ionique. Les résines ionomères disponibles dans le commerce comprennent généralement les copolymères acides précédemment mentionnés, partiellement neutralisés ou non, ou des sels métalliques ou aminés desdits copolymères acides (on trouve notamment des ionomères de sodium ou de zinc).

Les feuilles de résine ionomère sont généralement obtenues par coulée, extrusion, etc... Plusieurs structures de vitrages selon l'invention peuvent être envisagées telles que les structures décrites dans les brevets EP-0 191 088 ou EP-0 483 087. Les vitrages selon l'invention peuvent ainsi comprendre une ou plusieurs feuilles de verre, chaque feuille de verre étant revêtue ou non d'une ou plusieurs couches agissant, par exemple, sur la transmission énergétique ou lumineuse des vitrages, les vitrages comprenant en outre une ou plusieurs feuilles de résine ionomère et, éventuellement, une ou plusieurs feuilles d'une ou plusieurs autres matières plastiques (polyuréthane, polycarbonate, polyméthylméthacrylate ou autre plastique acrylique, polyvinylbutyral, ...), etc... Les résines ionomères adhérent plus ou moins bien aux autres matières plastiques utilisables pour réaliser des vitrages feuilletés et, le cas échéant, peuvent être co-extrudées avec lesdites matières. De préférence, chaque feuille de résine ionomère du vitrage selon l'invention se trouve entre deux feuilles de verre ou deux feuilles de matière plastique, ou entre une feuille de verre et une feuille de matière plastique.

Le chélate utilisé selon l'invention pour améliorer l'adhésion entre la feuille de résine ionomère et au moins une feuille adjacente, en particulier une feuille de verre, peut intervenir, dans le vitrage feuilleté selon l'invention, sous différentes formes. Il peut notamment faire partie d'un primaire utilisé pour enduire au moins une partie d'au moins une face de la feuille de résine ionomère et/ou au moins une partie d'au moins une feuille adjacente, notamment une feuille de verre munie ou non de couche(s) ou une feuille d'une autre matière plastique, avant assemblage des deux feuilles ; il peut aussi être incorporé dans la composition d'une des feuilles, notamment une feuille de résine ionomère, afin de la rendre autocollante.

Le chélate de métal utilisé selon l'invention peut être un chélate de titane, de zirconium, de chrome, etc... et est de préférence un chélate de titane. Les substituants (ou ligands) de ce chélate sont généralement des groupements présentant une fonction alcoxy liée à l'atome central du chélate, certains au moins de ces susbstituants présentant au moins un second atome porteur d'un (de) doublet(s) d'électrons libres. Le chélate de métal utilisé peut comprendre par exemple comme substituants des groupements choisis parmi les groupements suivants : triéthanolamine, acétylacétonate, octylèneglycol, isopropoxyle, butoxyle, etc... De préférence, le chélate utilisé est un chélate de métal comprenant au moins un (préférentiellement deux) groupement(s) acétylacétonate et présentant au moins un (préférentiellement deux) groupement(s) alcoxy (tel(s) qu'un (des) groupement(s) propoxyle, butoxyle, etc...). Ce chélate est par exemple un diisopropoxy-bis[acétylacétonate] de titane (commercialisé sous la référence TiACA 75 par la société HÜLS) ou un isopropoxy butoxy-bis[acétylacétonate] de titane, etc... (ces produits étant simplement désignés par « acétylacétonate de titane »).

L'utilisation du chélate pour améliorer l'adhésion entre la (les) feuille(s) de résine ionomère et au moins une (les) feuille(s) adjacente(s) au sein du vitrage feuilleté permet d'obtenir des vitrages feuilletés présentant une résistance accrue au délaminage, cette résistance se conservant dans le temps. Cette résistance est particulièrement intéressante dans le cas où les vitrages feuilletés réalisés sont de grandes dimensions et sont destinés à être sciés. Tout délaminage lors du sciage est ainsi évité pour les vitrages selon l'invention.

La résistance au délaminage des vitrages selon l'invention due à l'adhésion améliorée entre la (les) feuille(s) de résine et la (les) feuille(s) adjacente(s) se caractérise notamment par une valeur d'au moins 3 unités Pummel lorsque les vitrages sont soumis à l'essai Pummel, décrit ultérieurement dans les exemples de réalisation de l'invention, alors que la résistance au délaminage des vitrages feuilletés utilisant un primaire à base d'un ou plusieurs silanes n'excède généralement pas 1 unité Pummel. Dans la plupart des cas, la résistance au délaminage des vitrages selon l'invention est d'au moins 5 unités Pummel.

Outre une résistance au délaminage considérablement améliorée, les vitrages selon l'invention présentent une bonne résistance au choc, une bonne rigidité, permettent de minimiser les projections d'éclat en cas de bris, présentent de bonnes propriétés optiques, sont de fabrication simple et économique et peuvent être utilisés pour la réalisation de vitrages dans de nombreux types d'applications (comparativement, les vitrages à base de polycarbonate et de polyuréthane sont moins faciles et plus coûteux à réaliser et ne conviennent pas à certains types d'applications tels que la fabrication de pare-brise).

Les vitrages selon l'invention sont obtenus selon des procédés bien connus de l'homme de l'art, notamment par un assemblage des différentes feuilles du vitrage à chaud et sous pression. Le chélate utilisé peut être synthétisé à partir du chlorure de métal correspondant que l'on fait réagir dans des alcools ou de l'acétylacétone, la réaction étant éventuellement suivie d'une trans-estérification. Des chélates utilisables sont également disponibles commercialement.

Afin de réaliser les vitrages feuilletés selon l'invention, on utilise préférentiellement un primaire contenant le chélate défini selon l'invention. Ce primaire peut être appliqué sur la feuille de résine ionomère par l'intermédiaire d'un rouleau juste après l'opération d'extrusion ou peut être appliqué ou pulvérisé ultérieurement, sur la feuille de résine ionomère ou sur une autre feuille devant venir au contact de la feuille de résine ionomère.

Ce primaire contient au moins un chélate tel que précédemment mentionné et au moins un solvant du chélate tel qu'un alcool, par exemple l'isopropanol. La solution de chélate étant relativement stable, le primaire peut être conservé pendant quelques jours avant application. L'utilisation d'une telle solution de chélate permet également une application sur les feuilles à coller, le solvant étant avantageusement éliminé, par exemple par séchage, avant l'assemblage de la feuille primée et de la feuille devant être jointe par l'intermédiaire du primaire.

On peut également utiliser comme solvant du chélate des mélanges eau-alcool dans des proportions respectives permettant d'obtenir une solution claire (notamment des mélanges à au moins 50 % en poids d'alcool).

Selon un mode de réalisation particulièrement intéressant de l'invention, le (ou les) chélate(s) utilisé(s) pour améliorer l'adhésion au sein du verre feuilleté est (sont) associé(s) à au moins un silane, par exemple et avantageusement un époxysilane tel qu'un gamma glycidoxy-propyl-triméthoxy-silane. La combinaison d'au moins un chélate et un silane permet d'améliorer dans certains cas les résultats obtenus par rapport à l'utilisation d'un chélate seul. De préférence selon l'invention, lorsque l'on utilise un primaire comprenant au moins un chélate tel que précédemment défini et au moins un silane, ce primaire comprend un mélange d'eau et d'un solvant du chélate par exemple un mélange d'eau-alcool, notamment un mélange d'eau-isopropanol.

Le primaire selon l'invention comprend préférentiellement de 0,05 à 3 % en poids de chélate défini selon l'invention et de 95 à 99,95 % d'un mélange eau-alcool comprenant de 50 à 100 % d'alcool. Le primaire peut également comprendre un silane à des taux compris entre 0 et 3 % en poids, le rapport entre le taux de silane utilisé et le taux de chélate étant alors préférentiellement compris entre 1/3 et 3, le primaire comprenant alors avantageusement au moins 1 % et de préférence au moins 5 % en poids d'eau. L'extrait sec du primaire est compris entre 0,05 et 5 % en poids et est de préférence inférieur à 3 % en poids.

Les exemples suivant illustrent, sans toutefois la limiter, la présente invention et donnent des résultats obtenus par l'essai Pummel sur des vitrages selon l'invention.

### EXEMPLE 1

On réalise un vitrage feuilleté de la façon suivante : une feuille de résine ionomère à base de copolymères éthylène-méthacrylate est obtenue par extrusion puis intercalée entre deux feuilles de verre identiques, les faces des feuilles de verre au contact de la feuille de résine ionomère étant préalablement enduites d'un primaire puis séchées. L'empilement de feuilles est ensuite calandré avant assemblage définitif à chaud et sous pression.

Un test Pummel est ensuite effectué sur des échantillons du vitrage feuilleté obtenu, le test comportant les étapes suivantes :
- Les échantillons sont placés dans le congélateur à -18°C pendant deux heures au moins. Puis on retire les échantillons et on les martelle en utilisant le marteau électromagnétique, les éprouvettes étant testées dans les secondes qui suivent leur enlèvement du congélateur. Chaque échantillon est martelé progressivement par incréments de 10 mm de large sur une hauteur de 15 mm par rapport au bord inférieur de l'échantillon, l'échantillon étant incliné de 5 à 10°.
- Lorsque le bord inférieur a été complètement pulvérisé, on martelle les 15 mm suivants. Ce processus est répété jusqu'à pulvérisation de 10 cm environ de l'éprouvette. On veillera à pulvériser la totalité du verre sur les deux faces.
- On amène ensuite les échantillons testés à température ambiante et on laisse le temps à l'humidité condensée de s'évaporer avant de procéder à l'évaluation.
- Les échantillons sont ensuite comparés à des standards « Pummel » en regardant si le standard ou l'échantillon présente plus de résine exempte de verre. Cette procédure est répétée jusqu'à ce qu'une concordance ait été obtenue.
- L'échantillon est ensuite retourné et fait l'objet d'une nouvelle évaluation comme ci-dessus.

L'essai Pummel est considéré comme bon lorsque les valeurs observées se situent dans le domaine de 3 à 8 unités Pummel (de préférence 3 à 6 pour les applications automobiles et 5 à 8 pour les applications architecturales). On ne doit pas dépasser, de préférence, 8 unités Pummel afin de conserver certaines propriétés telles que la résistance à l'impact du vitrage. A moins de 3 unités Pummel, des risques de délaminage peuvent apparaître avec le temps.

Dans le présent exemple, le primaire utilisé est à base d'un acétylacétonate de titane (ajouté sous forme d'une solution à 75%, commercialisée sous la référence : TiACA 75 pour la société HÜLS) et d'isopropanol. La composition en poids du primaire est rapportée au tableau 1 ainsi que la valeur obtenue à l'essai Pummel.

### EXEMPLES 2, 3, 4, 5, 6

Dans ces exemples, on remplace le primaire utilisé dans l'exemple 1 par respectivement chacun des primaires dont la composition est donnée dans le tableau 1. Les résultats sont rapportés dans le tableau 1. Le silane utilisé est un gamma glycidoxy-propyl-triméthoxy-silane commercialisé sous la référence SILQUEST A187 par la société OSi.

### EXEMPLE DE RÉFÉRENCE

Dans cet exemple, on remplace le primaire utilisé dans l'exemple 1 par un primaire ne contenant pas de chélate mais contenant un aminosilane commercialisé sous la référence SILQUEST A1100 par la société OSi. La composition de ce primaire et les résultats obtenus sont rapportés dans le tableau I.

On observe une amélioration de l'adhésion en utilisant un primaire à base de chélate selon l'invention. les vitrages selon l'invention présentent une résistance accrue au délaminage.

Les vitrages feuilletés selon l'invention peuvent être utilisés dans le bâtiment ou les véhicules automobiles, par exemple pour réaliser des véhicules blindés, des vitrages de prison ou de banques, etc...

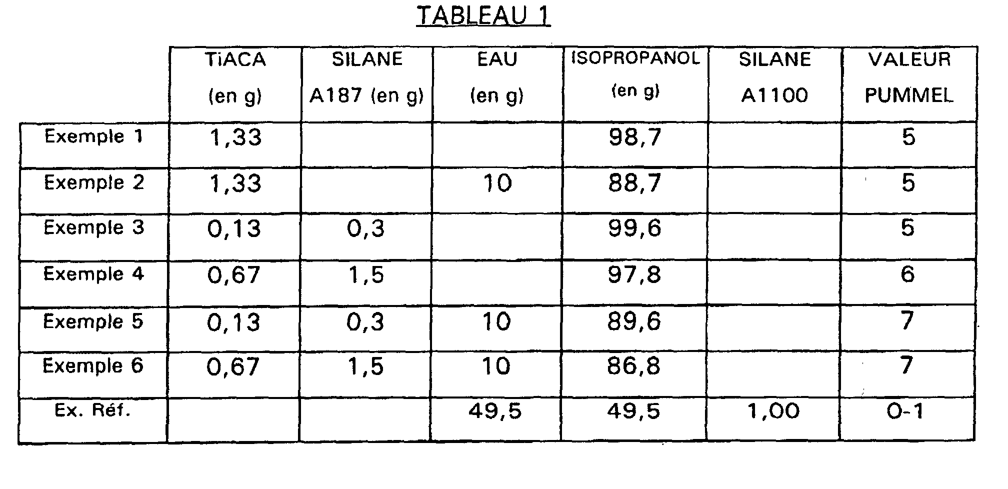

## Revendications

1. Vitrage comprenant au moins une feuille de verre et au moins une feuille transparente de résine ionomère, **caractérisé en ce que** l'adhésion de la feuille de résine ionomère se fait, en au moins l'une ou partie d'une de ses faces, par l'intermédiaire d'au moins un chélate de métal.

2. Vitrage selon la revendication 1, ***caractérisé en ce que*** le chélate est un chélate de titane.

3. Vitrage selon la revendication 2, ***caractérisé en ce que*** le chélate est un acétylacétonate de titane.

4. Vitrage selon l'une des revendications 1 à 3, ***caractérisé en ce que*** le chélate est combiné à au moins un silane.

5. Vitrage selon l'une des revendications 1 à 4, ***caractérisé en ce que*** le chélate fait partie d'un primaire appliqué en au moins une partie d'au moins une face de la feuille de résine ionomère et/ou en au moins une partie d'au moins une feuille adjacente.

6. Vitrage selon l'une des revendications 1 à 5, *caractérisé en ce qu*'il comprend en outre au moins une feuille d'une autre matière plastique.

## Patentansprüche

1. Glas, das mindestens eine Glasscheibe und mindestens eine transparente Folie aus einem Ionomerharz umfasst, **dadurch gekennzeichnet, dass** die Haftung der Ionomerharzfolie auf wenigstens einer oder einem Teil einer Seite über mindestens ein Metallchelat erfolgt.

2. Glas nach Anspruch 1, **dadurch gekennzeichnet, dass** das Chelat ein Titanchelat ist.

3. Glas nach Anspruch 2, **dadurch gekennzeichnet, dass** das Chelat Titanacetylacetonat ist.

4. Glas nach einem der Ansprüche 1 bis 3, **dadurch gekennzeichnet, dass** das Chelat mit mindestens einem Silan kombiniert ist.

5. Glas nach einem der Ansprüche 1 bis 4, **dadurch gekennzeichnet, dass** das Chelat Bestandteil eines Haftvermittlers ist, der auf wenigstens einem Teil mindestens einer Seite der Ionomerharzfolie und/oder auf wenigstens einem Teil mindestens einer angrenzenden Folie aufgebracht wird.

6. Glas nach einem der Ansprüche 1 bis 5, **dadurch gekennzeichnet, dass** es außerdem mindestens eine Folie aus einem anderen Kunststoff umfasst.

## Claims

1. Glazing comprising at least one sheet of glass and at least one transparent sheet of ionomer resin, **characterised in that** the adhesion of the sheet of ionomer resin is effected, on at least one or part of one of its faces, by means of at least one metal chelate.

2. Glazing according to Claim 1, **characterised in that** the chelate is a titanium chelate.

3. Glazing according to Claim 2, **characterised in that** the chelate is a titanium acetylacetonate.

4. Glazing according to one of Claims 1 to 3, **characterised in that** the chelate is combined with at least one silane.

5. Glazing according to one of Claims 1 to 4, **characterised in that** the chelate forms part of a primer applied to at least part of at least one face of the sheet of ionomer resin and/or to at least part of at least one adjacent sheet.

6. Glazing according to one of Claims 1 to 5, **characterised in that** it also comprises at least one sheet of another plastics material.
